Europäisches Patentamt

European Patent Office

Office européen des brevets

(11) Veröffentlichungsnummer: **0 520 170 A1**

# EUROPÄISCHE PATENTANMELDUNG

(21) Anmeldenummer: **92107767.3**

(22) Anmeldetag: **08.05.92**

(51) Int. Cl.5: **F01N 3/02**, F01N 9/00

(30) Priorität: **22.06.91 DE 4120702**

(43) Veröffentlichungstag der Anmeldung:
**30.12.92 Patentblatt 92/53**

(84) Benannte Vertragsstaaten:
**AT BE CH DE DK ES FR GB GR IT LI LU NL SE**

(71) Anmelder: **MAN TECHNOLOGIE
AKTIENGESELLSCHAFT
Dachauer Strasse 667 Postfach 50 04 26
W-8000 München 50(DE)**

(72) Erfinder: **Kreutmair, Josef, Dipl.-Ing. (FH)
Tegernbacher Strasse 25
W-8068 Pfaffenhofen(DE)**
Erfinder: **König, Nikolaus, Dipl.-Ing. (FH)
Imhoffstrasse 10
W-8061 Günzlhofen(DE)**
Erfinder: **Kleeblatt, Herbert, Dipl.-Ing.
Wotanstrasse 2
W-8034 Germering(DE)**

(54) **Brenner für die Regenerierung von Partikelfiltern.**

(57) Für den Betrieb eines Vollstrombrenners (13) für die Regenerierung von in Fahrzeugen angeordneten Partikelfiltern (12) wird eine Regelung der Zufuhr von Zusatzverbrennungsluft (17) für den Brenner (13) vorgeschlagen, wonach die Menge der Zusatzluft bei Absinken der Motordrehzahl herabgesetzt wird, um eine Entlastung der Bordbatterie (23) durch die Verwendung eines regelbaren Elektromotorgebläses (20,21) zu bewirken.

Die Erfindung bezieht sich auf ein Verfahren zum Betreiben der Luftzufuhr zu einem Brenner für die Regenerierung von im Fahrzeug-Abgassystem befindlichen Partikelfiltern, bei dem mittels eines Elektromotors unter Nutzung der Bordbatterie eine in ihrer Leistung regelbare Luftpumpe betrieben wird.

Ein System dieser Art ist aus der DE 37 40 047 A1 bekannt, bei dem der Brenner mit einem Kraftstoff/Luftgemisch versorgt und bei Bedarf in Betrieb gesetzt wird. Die Heißgase des Brenners werden in das mit einem Partikelfilter versehene Abgassystem einer Verbrennungsmaschine geleitet, um die im Filter festgehaltenen Rußpartikel zu verbrennen. Das Gebläse für die Verbrennungsluft wird so geregelt, daß bei Kaltstart des Brenners die Strömungsgeschwindigkeit der Verbrennungsluft verringert wird.

Beiden sogenannten Vollstrombrennern, bei denen der Brenner zumindest teilweise im Abgassystem angeordnet und auf einen Dauerbetrieb auslegbar ist, spielt der Brennerstart eine untergeordnete Rolle, zumal der direkt mit den Abgasen in Verbindung stehende Brenner bei Inbetriebnahme in der Regel aufgeheizt ist.

Der Brenner wird zumindest über eine Zeitspanne während des Durchströmens des Abgases durch den Filter betrieben und in der Regel mit einer Leistung, die dem aktuellen Betriebspunkt der Verbrennungsmaschine angepaßt wird. Das hat zur Folge, daß die von der Bordbatterie betriebene Luftpumpe durch relativ hohe Leistungsaufnahme des zugehörigen Elektromotors das Bordnetz stark belastet, was in besondere bei niedrigerer Verbrennungsmaschinendrehzahl zu Störungen führen könnte.

Der Erfindung liegt die Aufgabe zugrunde, ein Verfahren der eingangs genannten Art für Vollstrombrenner dahingehend zu verbessern, daß eine Überbeanspruchung der Bordbatterie vermieden wird.

Die Aufgabe wird erfindungsgemäß mit den Merkmalen des Anspruches 1 gelöst.

Die Leistungsaufnahme des Elektromotors der Luftpumpe verändert sich demnach proportional zur Leistungsabgabe der Lichtmaschine des Fahrzeuges, so daß bei niedrigen Motordrehzahlen, bei der die Leistungsabgabe der Lichtmaschine schwach ist, die Belastung der Bordbatterie durch die Luftpumpe ebenfalls gering ist. Auf diese Weise ist eine Auslegung der Bordbatterie zu höheren Kapazitäten hin aufgrund der Luftpumpe nicht oder nur in geringem Maße nötig.

Die Drehzahl der Luftpumpe wird vorzugsweise so ausgelegt, daß die Luftmenge für den Brenner im unteren Drittel der Verbrennungsmotordrehzahl höchstens ein 1/3 der maximal erforderlichen Luftmenge beträgt.

Dadurch kann die Leistungsaufnahme aus dem Bordnetz durch die Luftpumpe um etwa 60 bis 70% reduziert werden. Für den Fall, daß trotz der Drehzahlanpassung der Luftpumpe an die Bordnetzspannung die Gefahr des Absinkens der Spannung unter einen vorbestimmten Schwellwert besteht, wird gemäß einer weiteren Ausgestaltung der Erfindung vorgeschlagen, daß die Bordnetzspannung zumindest für die Dauer der Regeneration des Partikerfilters überwacht wird und daß bei Abfall der Bordnetzspannung unter einen vorbestimmten Mindestwert die Leerlaufdrehzahl der Verbrennungsmaschine des Fahrzeuges kurzzeitig angehoben wird. Damit wird eine zusätzliche Stabilisierung der Bordnetzspannung erreicht.

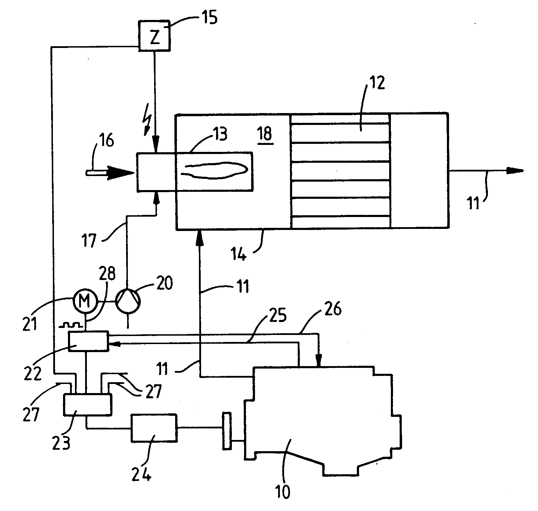

Die Erfindung wird anhand des in der Zeichnung schematisch dargestellten Ausführungsbeispieles näher erläutert.

Die Zeichnung zeigt eine Verbrennungsmaschine 10, in deren Abgasleistung 11 ein Partikelfilter 12 und ein Brenner 13 zwischengeschaltet sind. Die aus dem Verbrennungsmotor 10 kommenden Abgase gelangen in ein Gehäuse 14, in dem der Brenner 13 und der Filter 12 in Strömungsrichtung hintereinander angeordnet sind. In der Regel wird bei laufendem Motor 10 der Brenner 13 außer Betrieb sein, so daß sich Rußpartikel aus den Abgasen im Filter 12 ansammeln. Nach-von Fall zu Fall unterschiedlichen-vorgegebenen Kriterien wird der Brenner 13 bei Bedarf durch Zünden mittels eines Zündgerätes 15 und Zuführen von Brennstoff 16 und Verbrennungsluft 17 in Betrieb genommen. Die aus dem Brenner 13 austretenden Heißgase vermischen sich im Vorraum 18 des Filters 12 unter Anhebung der Abgastemperatur mit den Abgasen derart, daß die im Filter 12 angesammelten Rußpartikel oxidieren.

Der Regenerierungsprozeß erfolgt während des normalen Betriebes des Verbrennungsmotors 10. Es handelt sich hierbei um einen sogenannten Vollstrombrenner,dessen Leistung in Abhängigkeit des Motorbetriebes geregelt wird. Die Verbrennungsluft 17 für den Brenner 13 spielt dabei die Rolle einer Hilfsluft, da der Restsauerstoff aus den Abgasen des Verbrennungsmotors 10 für den Betrieb des Brenners 13 genutzt wird. Die Verbrennungsluft wird dazu mittels einer Luftpumpe 20, die von einem Elektromotor 21 angetrieben wird, zum Brenner gefördert. Der Elektromotor 21 der Luftpumpe 20 ist über einen Regler 22 an die Bordbatterie 23 angeschlossen, die von der Lichtmaschine 24 geladen wird.

Die Luftpumpe 20 bzw. der Elektromotor 21 wird entsprechend der maximal notwendigen Verbrennungsluftmenge ausgelegt. Zur Förderung dieser Verbrennungsluftmenge 17, die im oberen Lastbereich des Verbrennungsmotors 10 erforderlich ist, bedarf es einer relativ hohen Leistungsaufnahme durch den Elektromotor 21, was zur starken Belastung der Bordbatterie 23 führt. Um die Batteriebelastung auf ein Mindestmaß zu reduzieren, wird der Betrieb des Elektromotors 21 bzw.der Luftpumpe 20 mittels des Reglers 22 in Abhängigkeit des Motorkennfeldes des Verbrennungsmotors 10 geregelt. Dazu wird die Last und die Drehzahl des Verbrennungsmotors 10 gemessen (25) und im Regler 22 zur Regelung der Elektromotordrehzahl (28) verarbeitet. Im oberen Lastbereich des Verbrennungsmotors 10 enthalten die Abgase einen sehr geringen Restsauerstoffanteil, so daß in diesem Bereich die Luftpumpe 20 auf ihrer höchsten Drehzahl betrieben wird. In dieser Phase ist auch die Leistungsabgabe der Lichtmaschine 24 am höchsten, so daß für ausreichende Stromversorgung für den Elektromotor 21 und den übrigen Verbrauchern 27 im Fahrzeug gesorgt ist.

Verringert sich der Lastbetrieb bzw. die Drehzahl des Verbrennungsmotors, wird die Drehzahl des Elektromotors 21 ebenfalls heruntergeregelt, und zwar in einem Verhältnis, derart, daß im unteren Drittel des Verbrennungsmotor-Drehzahlbereiches die Verbrennungsluft 17 für den Brenner auf etwa 1/3 des Maximalwertes herabgesetzt wird.

Der Elektromotor 21 kann mit einer Impulsspannung 28 versorgt werden, wodurch eine einfachere Regelung durch Pulsweitenmodulation die Versorgungsspannung 28 in direkter Abhängigkeit des Motorkennfeldes geregelt werden kann. In einer einfachen Weise erfolgt die Regelung stufenweise. Selbstverständlich ist eine gleitende Drehzahlregelung ebenfalls möglich. Aufgrund der Nebenschlußcharakteristik des Elektromotors kann auch eine Spannungsregelung ausreichend sein.

Sollte trotz der vorstehend beschriebenen Maßnahmen der Drehzahlanpassung des Elektromotors 21 die Bordnetzspannung unter einen vorbestimmten Schwellwert absinken, ist eine zusätzliche Beeinflussung des VerbrennungsmotorLeerlaufes möglich. Dieses könnte ebenfalls automatisch über den Regler 22 erfolgen, der beim Registrieren einer zu niedrigen Batteriespannung auf die Brennstoffversorgung des Verbrennungsmotors 10 einwirkt (26), derart, daß die Leerlaufdrehzahl über die Dauer der Regeneration oder zumindest über die Dauer des niedrigen Lastbetriebes des Verbrennungsmotors 10 angehoben wird. Damit kann eine zusätzliche Stabilisierung der Bordnetzspannung erreicht werden.

**Patentansprüche**

1. Verfahren zum Betreiben der Luftzufuhr (17) zu einem Brenner (13) für die Regenerierung von im Fahrzeug-Abgassystem angeordneten Partikelfiltern (12), bei denen mittels eines Elektromotors (21) unter Nutzung der Bordbatterie (23) eine in ihrer Leistung regelbare Luftpumpe (20) betrieben wird, dadurch gekennzeichnet, daß bei der Verwendung eines Vollstrombrenners (13) für den Regenerierungsprozeß die Drehzahl der Luftpumpe (20) in Abhängigkeit des Motorkennfeldes der Verbrennungsmaschine (10) des Fahrzeuges verändert wird.

2. Verfahren nach Anspruch 1, dadurch gekennzeichnet, daß die Drehzahl der Luftpumpe (20) so geregelt wird, daß die beförderte Luftmenge (17) im unteren Drittel des Drehzahlbereiches der Verbrennungsmaschine (10) höchstens 1/3 der benötigten Höchstluftmenge beträgt.

3. Verfahren nach Anspruch 1 oder 2, dadurch gekennzeichnet, daß die Bordnetzspannung zumindest für die Dauer der Regeneration überwacht wird und daß bei Abfall der Bordnetzspannung die Leerlaufdrehzahl der Verbrennungsmaschine (10) des Fahrzeuges angehoben wird.

Europäisches
Patentamt

**EUROPÄISCHER RECHERCHENBERICHT**

Nummer der Anmeldung

EP    92 10 7767

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>Y | US-A-4 615 173 (USUI)<br>* Spalte 2, Zeile 27 - Zeile 44 *<br>* Spalte 5, Zeile 28 - Zeile 42 *<br>* Spalte 6, Zeile 15 - Zeile 29; Abbildung 1 *<br>--- | 1<br>3 | F01N3/02<br>F01N9/00 |
| Y | DE-A-3 832 727 (ROBERT BOSCH GMBH)<br>* Spalte 2, Zeile 49 - Zeile 57 *<br>--- | 3 | |
| A | DE-A-3 728 006 (LICENTIA PATENT-VERWALTUNGS-GMBH )<br>* das ganze Dokument *<br><br>----- | 1 | |
| | | | **RECHERCHIERTE SACHGEBIETE (Int. Cl.5)**<br><br>F01N<br>F02D |

Der vorliegende Recherchenbericht wurde für alle Patentansprüche erstellt

| Recherchenort | Abschlußdatum der Recherche | Prüfer |
|---|---|---|
| DEN HAAG | 27 AUGUST 1992 | FRIDEN C.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)